# EUROPÄISCHE PATENTSCHRIFT

(11) **EP 3 020 550 B1**
(45) Veröffentlichungstag und Bekanntmachung des Hinweises auf die Patenterteilung: **07.03.2018**
(21) Anmeldenummer: 15003220.9
(22) Anmeldetag: 11.11.2015
(51) Int. Cl.: B33Y 30/00, B33Y 40/00, B41J 2/165, B29C 67/00

(54) **DRUCKKOPF UND EXTRUDERDÜSE FÜR 3D-DRUCK**
PRINT HEAD AND EXTRUSION NOZZLE FOR 3D PRINTING
TÊTE D'IMPRESSION ET BUSE D'EXTRUDEUSE POUR IMPRESSION 3D

(30) Priorität: 13.11.2014 DE 102014116626; 09.03.2015 DE 102015103377
(43) Veröffentlichungstag der Anmeldung: 18.05.2016
(73) Patentinhaber: multec GmbH, 88271 Wilhelmsdorf (DE)
(72) Erfinder: Rapp, Petra, 88271 Wilhelmsdorf (DE)
(74) Vertreter: Otten, Roth, Dobler & Partner mbB Patentanwälte

(56) Entgegenhaltungen:
- EP-A1- 2 329 935
- CN-A- 103 878 979
- US-A1- 2005 212 837
- US-A1- 2010 021 580
- US-A1- 2014 328 964
- US-A1- 2015 140 147

## Beschreibung

Die Erfindung betrifft einen Druckkopf unter Verwendung eines Extruders zur Erstellung dreidimensionaler Werkstücke mit einem 3D-Druck-Verfahren. Bei dem 3D-Druck-Verfahren wird das Werkstück durch schichtweises Auftragen eines Werkstoffs, meist eines Filaments, aufgebaut. Der Werkstoff, der bei Raumtemperatur fest ist, wird vor dem Auftragen thermisch verflüssigt und verfestigt sich unmittelbar nach dem Auftragen durch Abkühlen wieder. Somit kann Schicht für Schicht ein dreidimensionales Werkstück aufgebaut werden. Ferner betrifft die Erfindung eine Extruderdüse für 3D-Druck-Verfahren.

Nachteilig an bekannten 3D-Druckköpfen ist, dass ein Restrisiko des Nachtropfens von Material besteht, selbst wenn kein aktiver Materialauftrag gewünscht wird. Insbesondere besteht dieses Risiko dann, wenn in einem Druckkopf mehrere Extruderdüsen für mehrere Materialien existieren, welche ggf. mehrere Farben oder mechanische Eigenschaften zur Verfügung stellen.

Aus dem Stand der Technik ist beispielsweise aus der EP 1 869 133 B1 eine Vorrichtung zum Verdrucken eines fluiden Materials mit einem Auffanggatter zum Auffangen bestimmter Tropfen des Materials bekannt. Aus der CN 103 878 979 A ist ein Druckkopf für einen 3D-Drucker bekannt, der ein Absperrventil aufweist.

Aufgabe der Erfindung ist es, einen Druckkopf bzw. einen Extruder für 3D-Druck-Verfahren bereitstellen zu können, der eine verbesserte Druckqualität und Fehlersicherheit bieten kann.

Die Aufgabe wird, ausgehend von einem Druckkopf bzw. einer Extruderdüse der eingangs genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Die folgende Beschreibung konzentriert sich auf die Verwendung von thermoplastischem Druckmaterial, insbesondere dem sogenannten Filamentdruck. Es ist jedoch nicht ausgeschlossen, anderweitige Verfahren und Materialien zu verwenden, welche sich durch entsprechende Extruderdüsen aufbringen und anschließend aushärten lassen. Hierdurch wird die Erfindung weder beschränkt noch sind diese Materialien vom erfindungsgemäßen Gedanken einer Abdeckvorrichtung ausgenommen. Beispielhaft, jedoch nicht abschließend seien hier Materialien mit lichthärtenden Eigenschaften, Trocknung durch Lösungsmittelverdampfung und Quervernetzungen von Kunststoffen angegeben, die in entsprechenden Zeitskalen nach der Abgabe aus der Extruderdüse erfolgen.

Der erfindungsgemäße Druckkopf dient zum 3D-Drucken mittels Schmelzschichtung (englisch: Fused Deposition Modeling, Abkürzung: FDM). Dabei wird ein Druckteil erzeugt, in dem heiße Kunststoffmasse in Form von Fäden oder Punkten auf eine Unterlage aufgetragen wird. In der Regel wird durch schichtweise Auftragung somit ein Körper gebildet. Der Druckkopf umfasst dazu wenigstens eine Extruderdüse zur dosierten Ausgabe des verflüssigten Werkstoffs aus einer formgebenden Öffnung. In der Regel umfasst die Extruderdüse eine Heizvorrichtung. Die Extruderdüse selbst ist in der Regel verfahrbar. Alternativ dazu kann aber auch der Untergrund, auf dem der dreidimensionale Körper gestaltet werden soll, verfahren werden. Bei einigen Anwendungen ist lediglich die Druckdüse anhebbar oder senkbar, während der Drucktisch wiederum in einer Ebene verfahren werden kann. Auch die vollständige, dreiachsige Bewegung des Drucktischs ist bekannt. Die geschmolzenen und aufgetragenen Fäden oder Punkte verbinden bzw. verschmelzen an ihren Grenzflächen miteinander und verfestigen sich, sodass ein vergleichsweise belastbares, dreidimensionales Kunststoffgebilde entsteht. Zur Extruderdüse hin wird das Material, aus dem der 3D-Druck entsteht, regelmäßig in Form eines Filaments zugeführt, wobei das Filament zum Beispiel auf einer drehbar gelagerten Filamentrolle bevorratet ist.

Bei der Drucktechnik mit Schmelzschichtung sind grundsätzlich zwei Varianten denkbar. Entweder verfährt der Drucktisch in einer Ebene horizontal (definiert meist als X- und Y-Richtung) und der Druckkopf bzw. der Extruder verfährt in einer Richtung senkrecht zu dieser Ebene (definiert als Z-Richtung), oder aber umgekehrt, der Druckkopf bzw. Extruder verfährt in einer horizontalen Ebene in X- und Y-Richtung, während der Tisch lediglich senkrecht dazu in Z-Richtung verfahrbar ist. Denkbar sind aber auch Varianten mit Kombinationen aus beiden Möglichkeiten. Der Antrieb des Druckkopfes bzw. des Drucktisches erfolgt meist über einen Schrittmotor.

Insgesamt wird jede Materialart, unterscheidbar durch Farbe und/oder physikalische Eigenschaften wie Härte, Elastizität und andere Parameter, beim Druck durch eine Extrudervorrichtung bereitgestellt. Die Extrudervorrichtung umfasst dabei in der Regel mindestens ein Vorschubmittel, beispielsweise eine Vorschubwalze, eine Transportschnecke oder dergleichen, welches das Material der Heiz-/ bzw. Schmelzeinrichtung und nachfolgend der Extruderdüse zuführt. Vorteilhaft ist dabei, die Extruderdüse selbst als Schmelzeinrichtung einzusetzen, indem diese entsprechend beheizt wird, um den Schmelzprozess bereit zu stellen.

Es ist eine Abdeckungsvorrichtung vorgesehen, um die formgebende Öffnung in Ausgaberichtung hinter der Extruderdüse abzudecken, sodass aus der Öffnung austretender, insbesondere nachtropfender Werkstoff durch die Abdeckungsvorrichtung auffangbar ist ohne auf das Werkstück zu gelangen. Die Abdeckungsvorrichtung und die wenigstens eine Extruderdüse sind relativ zueinander bewegbar, sodass die formgebende Öffnung der wenigstens einen Düse in deren Ruhezustand von der Abdeckungsvorrichtung in Ausgaberichtung abgedeckt und zum Drucken in Ausgaberichtung wieder freigegeben werden kann. Erfindungsgemäß ist vorgesehen, dass die wenigstens eine Extruderdüse in Ausgaberichtung relativ zur Abdeckungsvorrichtung verfahrbar ist und dass eine Kurvensteuerung vorgesehen ist, um eine mechanische Bewegung der wenigstens einen Extruderdüse an eine Bewegung der Abdeckungsvorrichtung zu koppeln und/oder umgekehrt. Dadurch wird ermöglicht, dass wenigstens ein Motor eingespart wird, weil durch die Kopplung der Bewegungen beider Bauteile nur ein Abtrieb benötigt wird. Zudem wird aber auch das Risiko verringert, dass es zu Fehlern beim Druck kommt, weil dann, wenn Extruderdüse und Abdeckungsvorrichtung separat voneinander betrieben werden, eine absolut präzise Synchronisierung zwischen beiden notwendig ist. Durch die Kopplung über die Kurvensteuerung ist diese Synchronisierung implementiert. Darüber hinaus kann eine Gewichtseinsparung erreicht werden, weil ein zusätzlicher Antrieb vermieden werden kann. Bei einigen Druckköpfen ist es vorgesehen, diese in Z-Richtung zu bewegen, während der Drucktisch selbst horizontal, d.h. in X- und/oder Y-Richtung, bewegt werden kann. Gerade dann, wenn wenigstens zwei Extruderdüse am Druckkopf angeordnet sind, ist es besonders vorteilhaft, die Extruderdüse insbesondere separat in Z-Richtung bzw. in Ausgaberichtung verfahren zu können, sodass die Extruderdüse, die gerade für den Druck benötigt wird, z.B. nach unten in Ausgaberichtung verfahren wird. Diese Maßnahme bietet grundsätzlich mehrere Vorteile.

Zum einen kann dadurch eine Platzeinsparung erreicht werden, weil nur die Extruderdüse, die gerade benötigt wird, näher an den Drucktisch herangebracht wird. Gerade dann, wenn kompliziertere 3D-Drucke erstellt werden sollen, ist es notwendig, dass andere Teile des Druckkopfes bzw. andere Extruderdüse nicht bei der Positionierung des Druckkopfes bzw. der Öffnung der Extruderdüse gegenüber dem Drucktisch mit dem darauf befindlichen Werkstück im Wege sind. Darüber hinaus können auch weniger starke und teure Motoren eingesetzt werden, die für die entsprechende Positionierung sorgen, weil die präzise Positionierung der jeweils druckenden Extruderdüse lediglich vom Motor erfordert, dass die Extruderdüse selbst verfahren wird. Würde der gesamte Druckkopf für jede einzelne Positionierung derart präzise verfahren werden, so wäre hierfür nicht nur ein stärkerer Motor erforderlich, sondern auch ein Motor mit zusätzlich entsprechend höherer Positioniergenauigkeit. Auf diese Art und Weise können deshalb Kosten eingespart werden.

Beim Drucken kann es grundsätzlich vorkommen, dass die erwärmte Düse am Ende des eigentlichen Druckvorgangs mehr Material erwärmt hat als notwendig oder aber aufgrund der verbleibenden Resthitze noch weiter Material verflüssigt, welches sich von der Düse lösen und herabtropfen kann. Zwar wird oftmals der Kunststoff nach Beendigung des Druckvorgangs von einer Extruderdüse durch die Vorschubmittel zurückgezogen, damit ein weiteres Aufschmelzen unterbunden wird, dennoch besteht im Allgemeinen das Risiko, dass erwärmtes Kunststoffmaterial aus der Extruderdüse ungewollt herabtropft. Dies ist insbesondere dann nachteilig, wenn sich der Druckkopf weiterhin über dem zu bildenden Körper befindet, weil das herabtropfende Material sodann auf den entstehenden Körper tropfen kann und sich dort verfestigt. Die Folge ist, dass unkontrolliert und ungewollt Materialablagerungen ("Nasen", zusätzliche Fäden usw.) auf dem zu druckenden Körper entstehen. Gegebenenfalls kann dadurch das Druckergebnis sogar völlig unbrauchbar werden. Dies geschieht insbesondere dann, wenn der Druckkopf mehrere Düsen aufweist und diese beim Druckvorgang gemeinsam verfahren werden. Wird lediglich der Tisch als Unterlage bewegt, und der Druckkopf kann lediglich nach oben und unten gefahren werden, so ergibt sich analog die gleiche Problematik, welche ebenso durch die Erfindung gelöst werden kann, bei welcher der Druckkopf eine Abdeckungsvorrichtung aufweist.

Die erfindungsgemäße Vorrichtung ermöglicht in vorteilhafter Weise somit auch das Auffangen von Tropfen, wenn die Extruderdüse nach dem Drucken in eine fest vorgegebene Parkposition bzw. Stand-by-Position über dem Drucktisch verfahren wird. Die Erfindung ermöglicht dadurch die Realisierung eines Druckkopfes, welcher insbesondere beim Einsatz mehrere Extruderdüsen weniger komplex aufgebaut ist und dadurch schneller arbeiten kann. Insbesondere kann es vermieden werden, dass jede Extruderdüse separat in eine Stand-by-Position, abseits ihrer Arbeitsposition verfahren werden muss. Somit ist die Integration mehrerer Extruderdüsen in einem Druckkopf erleichtert.

Insgesamt ermöglicht die Erfindung es daher, wesentlich verbesserte und fehlerfreiere Druckergebnisse zu erzeugen.

Grundsätzlich kann die Abdeckungsvorrichtung bewegt werden oder aber die Düse, wobei immer jedoch eine Relativbewegung zwischen beiden realisiert wird.

In einer vorteilhaften Ausführungsform kann der Druckkopf als Gesamtgebilde zusammen mit der Abdeckungsvorrichtung relativ zur Unterlage bewegt werden, sei es, dass der Druckkopf eine Bewegung in einer Ebene parallel zum Drucktisch (X-/Y-Ebene) oder eine Bewegung senkrecht zur Druckebene (Z-Richtung) oder eine Bewegung in allen drei Raumachsen (X,Y,Z) ausführt. Die gemäß der Erfindung vorgesehene Anbringung der Abdeckungsvorrichtung am Druckkopf ermöglicht im Unterschied zu einer Anbringung der Abdeckungsvorrichtung am Drucktisch insbesondere eine freiere Gestaltung des Druckteils, weil bei der Anbringung am Drucktisch die Größe des Druckteils begrenzt würde und insgesamt auch die Bewegungsfreiheit eingeschränkt bliebe. Besonders vorteilhaft ist also an der vorliegenden Ausführung der Erfindung, dass die Abdeckungsvorrichtung ein Bestandteil des Druckkopfes ist.

Der Druckkopf bzw. die Extruderdüse muss in diesem Fall nicht gesondert in eine Ruheposition gefahren werden, in der dann erst die Abdeckungsvorrichtung zur Verfügung steht und Tropfen abfangen kann. Vielmehr wird diese stets mitbewegt. Ist lediglich, wie im Stand der Technik vorgesehen, eine feststehende und unbewegliche Auffangschale vorhanden, so wird das Problem nicht beseitigt, dass unmittelbar nach dem Beenden eines Druckvorgangs durch eine Extruderdüse diese nachtropfen kann und die Tropfen nicht aufgefangen werden, weil der Druckkopf bzw. die Düse erst in eine entsprechende Ruheposition gefahren werden muss.

Vorteilhaft ist es weiterhin, dass die Abdeckungsvorrichtung im Allgemeinen in Schwerkraftrichtung unter der wenigstens einen Extruderdüse angeordnet ist, zumindest, solange diese nicht druckt. Regelmäßig liegt die Ausgaberichtung in Schwerkraftrichtung. Aus einer passiven, gerade nicht druckenden Extruderdüse herabfallende Materialtropfen werden sodann stets von der Abdeckungsvorrichtung entsprechend aufgefangen.

Bei einem weiteren Ausführungsbeispiel der Erfindung ist die Abdeckungsvorrichtung, wenn sie die formgebende Öffnung der wenigstens einen Extruderdüse in Ruhezustand in Ausgaberichtung abdeckt, von dieser beabstandet angeordnet. Der Abstand kann dabei so groß gewählt werden, dass herabtropfendes Material nicht unmittelbar dann, wenn es noch mit der Öffnung der Düse in Kontakt ist, bereits auf die Abdeckungsvorrichtung gelangt und somit beim Erhärten die Düse über den hartwerdenden Kunststoff mit der Abdeckungsvorrichtung verbunden ist, insbesondere verstopft. Somit können Blockaden vermieden werden. Auch wird gegebenenfalls Reibung oder ein Drehmoment vermieden, was entstehen würde, wenn bei der Relativbewegung zwischen Abdeckungsvorrichtung und Extruderdüse diese miteinander verbunden wären oder sich berühren.

Die Abdeckungsvorrichtung kann bei einer zweckmäßigen Ausführungsvariante der Erfindung als flächige Scheibe ausgebildet sein. Die flächige Scheibe kann dabei insbesondere horizontal angeordnet werden, woraus sich grundsätzlich bereits eine platzsparende Anordnung in Z-Richtung ergibt. Durch die flächige Ausbildung kann sich sodann eine gewisse Menge an herabtropfendem Material auf der Scheibe ablagern, ohne selbst wiederum herabzutropfen. Zudem kann eine flächige Scheibe, beispielsweise durch Verdrehen oder Verfahren in eine Richtung einfach bewegt werden, sodass eine Relativbewegung zwischen ihr und der Extruderdüse mit einfachen mechanischen Vorrichtungen erreicht werden kann. Je einfacher der mechanische Antrieb gestaltet werden kann, desto kostengünstiger kann die Vorrichtung realisiert werden. Zudem führt der Umstand, dass lediglich eine einfache Bewegung zur Freigabe der Extruderdüse notwendig ist, auch dazu, dass grundsätzlich die Druckgeschwindigkeit und/oder die Wechselgeschwindigkeit mehrerer Extruderdüsen erhöht werden kann und auch die Wartungsanfälligkeit geringer ausfällt.

Es ist in einer weiteren Ausführungsform denkbar, dass ein Druckkopf mehrere Extruderdüsen aufweist. Wenn die gesamte Abdeckungsvorrichtung unter dem Druckkopf herausgefahren würde, um eine einzige Düse zum Drucken freizugeben, bedeutet dies einerseits einen relativ großen Verfahrweg, andererseits birgt diese Anordnung auch das Risiko, dass gerade zuvor verwendete, zum Zeitpunkt der Verfahrbewegung aber nicht mehr benötigte Extruderdüse nachtropfen und die Abdeckungsvorrichtung gerade dann nicht mehr unter den entsprechenden Extruderdüse angebracht ist. Um dies zu vermeiden, ist bei einer besonders bevorzugten Weiterbildung der Erfindung eine Aussparung in der Abdeckungsvorrichtung vorgesehen. Die Abdeckungsvorrichtung kann dann relativ zur Düse so verfahren werden, dass dann, wenn die Extruderdüse nicht benötigt wird, die Aussparung sich entsprechend nicht unterhalb der Extruderdüse befindet, aber dann, wenn die Extruderdüse tatsächlich benötigt wird, die Aussparung unter die Extruderdüse fährt, sodass diese freigegeben ist. Diese Aussparung kann in der Größe auch speziell auf die Extruderdüse abgestimmt sein und so klein wie nötig gewählt werden. Sind am Druckkopf mehrere Extruderdüsen angebracht, so werden diese im passiven Zustand stets von der Abdeckungsvorrichtung abgedeckt, sodass keine Gefahr für den zu bildenden Körper von herabtropfendem Material besteht. Außerdem können, wie bereits dargestellt, die Verfahrwege der Abdeckungsvorrichtung geringgehalten werden, weil nicht die gesamte Abdeckungsvorrichtung entfernt werden muss, sondern lediglich um die Strecke zu bewegen ist, um welche die Aussparung bewegt werden muss, um unter die jeweilige Extruderdüse zu gelangen.

Alternativ kann vorgesehen sein, die Extruderdüsen und ggf. daran angeordnete Extruderzylinder unabhängig von der Abdeckungsvorrichtung zu bewegen, so dass ein Überfahren inaktiver Extruderdüsen mit der freigebenden Öffnung ermöglicht ist, ohne die Bewegung der Extruderdüse zu veranlassen oder diese kurzfristig freizugeben. Da der Antrieb der Extruderdüse und der Abdeckungsvorrichtung durch eine Kopplung mittels Kurvensteuerung erfolgt, kann der entsprechende Getriebemechanismus vergleichsweise einfach ausgebildet sein, wenn als Bewegung nur eine einfache Drehung oder eine Linearbewegung benötigt wird, was sich ebenfalls vorteilhaft auf die Zuverlässigkeit auswirken kann.

Damit die Öffnung der Extruderdüse möglichst nahe an das zu bedruckende Werkstück gelangen kann, ist bei einer vorteilhaften Ausführungsvariante der Erfindung die wenigstens eine Extruderdüse wenigstens teilweise durch die Aussparung hindurch verfahrbar.

Grundsätzlich sind verschiedene Varianten denkbar, um je nach Anwendung eine Optimierung der Anordnung der Extruderdüse zu erreichen. Beispielsweise können wenigstens zwei Extruderdüse bei einer Weiterbildung der Erfindung vorgesehen sein, die auf einer Kreisbahn angeordnet sind, wobei die Abdeckungsvorrichtung um eine Achse, die durch den Mittelpunkt der Kreisbahn sowie senkrecht zur Kreisbahnebene verläuft, drehbar ausgebildet ist. Bei dieser Ausbildung ist es insbesondere vorteilhaft, die Aussparung z.B. auf der Projektion der Kreisbahn entlang der Achse auf die Abdeckungsvorrichtung zu positionieren, sodass bei einer Drehung der Abdeckungsvorrichtung die Aussparung unter die angewählte, für den nächsten Druckvorgang vorgesehene Extruderdüse zu verfahren. Da eine Kurvensteuerung vorgesehen ist, kann die Bewegung der Extruderdüse in Z-Richtung über ein Getriebe in eine Drehbewegung umgewandelt werden, die so abgestimmt ist, dass beim Verfahren der Extruderdüse bis zur Endposition die Aussparung der Abdeckungsvorrichtung an die entsprechende, vorgesehene Stelle verfährt. Die Extruderdüse kann gegebenenfalls auch während der Bewegung der Abdeckungsvorrichtung in bzw. durch die Aussparung hinein / hindurch gefahren werden. Durch diese Anordnung wird eine besondere Platzeinsparung ermöglicht, weil eine Drehung, z.B. um die Z-Achse, so gestaltet werden kann, dass der Druckkopf einen konstanten Raum einnimmt.

Optional hierzu ist aber auch eine Anordnung wenigstens zweier Extruderdüse auf einer Linie möglich, wobei die Abdeckungsvorrichtung sodann entsprechend auf einer parallel zu der Linie ausgerichteten Achse verfahrbar ausgebildet sein kann. Insbesondere kann in diesem Fall die Aussparung auf der Projektion einer der Extruderdüse im Ruhezustand senkrecht auf die Abdeckungsvorrichtung liegen. In der Regel genügt grundsätzlich eine Linearbewegung, um die Aussparung entsprechend unter die aktive Extruderdüse zu verfahren. Daneben sind grundsätzlich auch andere Anordnungsvarianten möglich. Denkbar ist es auch, diese Anordnungen danach auszusuchen, ob mit einem 3D-Drucker verschiedene Formen gedruckt werden sollen, oder ob es sich beispielsweise um eine vorkonfektionierte Produktionsmaschine handelt, in der lediglich vorgegebene definierte Formen gefertigt werden, sodass eine Anordnung optimiert an diese Formen angepasst werden kann und ein Verfahren der einzelnen Vorrichtungen möglichst schnell und einfach erfolgt.

Um ein höheres Maß an Sicherheit zu gewährleisten, damit eine gleichbleibend hohe Qualität erreicht werden kann, kann die Abdeckungsvorrichtung eine Auffangvorrichtung aufweisen, um nachtropfenden Werkstoff, gegebenenfalls auch in größeren Mengen, aus einer der im Ruhezustand befindlichen Extruderdüse aufzufangen, wobei insbesondere die Auffangvorrichtung eine Rinne zum Auffangen aufweisen kann. Denkbar ist aber auch, dass die Auffangvorrichtung aus der Abdeckungsvorrichtung z.B. entnehmbar ist, um anschließend separat vom Druckkopf gereinigt zu werden. Während grundsätzlich eine flache Scheibe ausreichend sein kann, ermöglicht eine Auffangrinne, dass gerade dann, wenn vergleichsweise viel Material heruntertropft, dieses auf der Scheibe gehalten wird und sich auch in geringerem Maße "auftürmen" kann. Ferner wird die Gefahr verringert, dass das Material seitlich zum Rand der Scheibe hinfließt und dort heruntertropft. Eine Entnehmbarkeit einer solchen Auffangvorrichtung ermöglicht es, regelmäßig, z.B. nach jedem Druckvorgang, aber auch während des Druckvorgangs oder während einer Unterbrechung des Druckvorgangs, die Auffangvorrichtung zu säubern, ohne den gesamten Druckkopf ausbauen zu müssen. Hierdurch wird die Flexibilität der Vorrichtung noch einmal wesentlich erhöht. Die Auffangvorrichtung ist dabei in vorteilhafter Weise aus einem Material gefertigt, das ein einfaches Lösen des herabgetropften Materials ermöglicht. Denkbar ist aber auch, dass die Auffangvorrichtung als Einwegvorrichtung ausgebildet ist und mit dem Material entsorgt wird. Die Auffangvorrichtung kann leicht und hinsichtlich ihrer Größe sehr platzsparend ausgebildet sein.

Um die Wartungsanfälligkeit des Druckkopfes darüber hinaus zu verbessern, kann eine Reinigungsvorrichtung vorgesehen sein, um eine der wenigstens einen Extruderdüse und/oder ihre formgebende Öffnung nach bzw. vor dem Drucken von dem Werkstoff zu reinigen. Es ist grundsätzlich denkbar, dass nicht das gesamte, noch verbleibende erhitzte Material von der Extruderdüse herabtropft. Gerade dann, wenn die Extruderdüse nach einem Druckvorgang eine Zeitlang nicht benötigt wird, kann mit dem Erkalten der Extruderdüse auch Material an der Öffnung hängenbleiben. Die Öffnung kann somit verstopfen, was zu Ausfällen oder zumindest zu Qualitätseinbußen führen kann. Eine derartige Reinigungsvorrichtung kann beispielsweise als Bürste, als Klinge bzw. Messer oder als flexibler Abstreifer ausgebildet sein, die wiederum eine Relativbewegung zur Extruderdüse durchführen kann und die Extruderdüse von dem verbliebenen Material befreit. Die Wahl, ob es sich um eine Bürste, ein Messer oder dergleichen handeln soll, kann insbesondere vom verwendeten Werkstoff abhängen, aus dem das Werkstück gebildet wird. Die Auswahl kann aber auch davon abhängen, ob situationsbedingt damit gerechnet wird, dass das Material bereits erkaltet und erstarrt ist oder noch eine gewisse Fließfähigkeit aufweist. Entsprechend kann eine Reinigung im Allgemeinen vor und/oder nach einem Druckvorgang erfolgen, je nachdem, in welchem Maße sichergestellt werden soll, dass die Öffnungen der Extruderdüse sich nicht zugesetzt hat oder wie sich der Werkstoff beim Erkalten verhält bzw. wie schnell er erstarrt.

Um einen Antrieb einsparen zu können, kann die Reinigungsvorrichtung mit der Abdeckungsvorrichtung bzw. mit wenigstens einer Extruderdüse mechanisch gekoppelt sein, ggf. auch fest verbunden sein, sodass die Reinigungsvorrichtung den Reinigungsvorgang bei der Relativbewegung zwischen Abdeckungsvorrichtung und der wenigstens einen Extruderdüse bzw. beim Verfahren der entsprechenden Extruderdüse in Ausgaberichtung durchführt. Hierdurch können durch Einsparung eines Antriebs die Kosten für einen Druckkopf verringert werden. Darüber hinaus erfolgt automatisch sodann eine Reinigung zu Beginn und/oder am Ende eines Druckvorgangs.

Entsprechend ermöglicht diese Maßnahme aber auch eine Platzsowie Gewichtseinsparung.

### Ausführungsbeispiel

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Figur 1: eine perspektivische Ansicht eines erfindungsgemäßen Druckkopfs von schräg unten;
- Figur 2: eine seitliche Ansicht eines erfindungsgemäßen Druckkopfs;
- Figur 3: eine stirnseitige Ansicht eines erfindungsgemäßen Druckkopfs;
- Figur 4: einen Schnitt entlang der Linie A-A aus Figur 2;
- Figur 5: eine unterseitige Ansicht eines erfindungsgemäßen Druckkopfs;
- Figur 6: eine vergrößerte Ansicht des Bereichs "X" der Figur 4.

Gleiche Bestandteile sind durchgehend mit gleichen Bezugszeichen versehen.

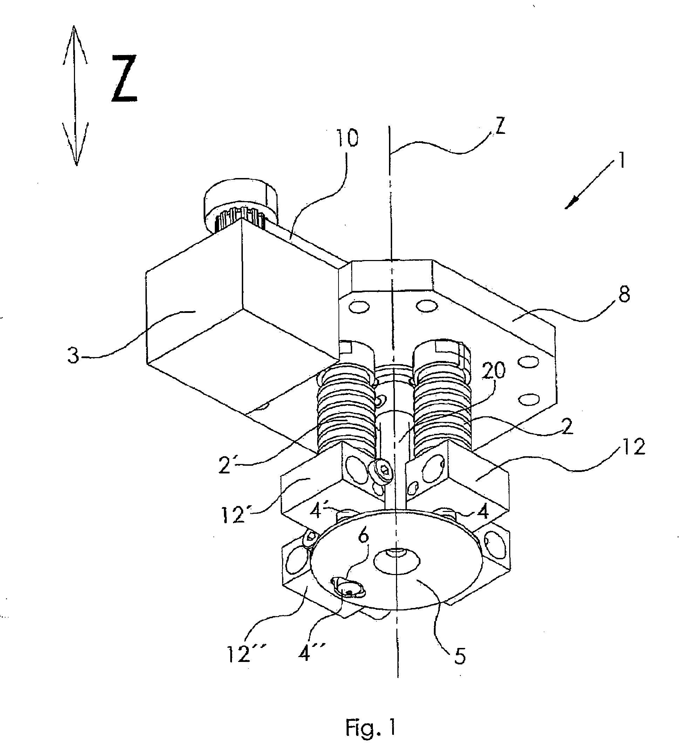

Figur 1 zeigt eine Schrägansicht eines Druckkopfs 1 gemäß der Erfindung. Der Druckkopf 1 umfasst Bestandteile eines nicht näher dargestellten Extruders zur Abgabe von Werkstoff, z.B. von Filament. Bestandteil des Druckkopfs 1 sind die Extruderzylinder 2, 2', 2" zu den Extruderdüsen 4, 4', 4". sowie ein Antrieb 3, um eine Abdeckungsvorrichtung 5 des Druckkopfes 1 um die Achse Z über einen Antriebsriemen 10 zu drehen und zu positionieren.

Mit dem Druckkopf 1 werden 3D-Drucke erstellt. Er bedient sich der FDM-Technik, d.h. es wird ein Werkstück bzw. ein Druckteil erzeugt, indem faden- bzw. punktförmige Kunststoffmassen auf eine Unterlage, den sogenannten Drucktisch, aufgetragen werden. Der Auftrag erfolgt meistens schichtweise, wobei der Körper meist in Richtung der Z-Achse von unten nach oben schichtweise aufgebaut wird. Bei dem Kunststoff handelt es sich um einen thermoplastischen Kunststoff, der über eine Heizvorrichtung 12, 12', 12" in den Extruderzylindern 2, 2', 2" im Druckkopf 1 im jeweiligen Kanal 13, 13' 13" der entsprechenden Extruderzylinder 2, 2' ,2" erhitzt wird, sich verflüssigt und sodann der aufgeschmolzene Stcff durch die Öffnung der jeweiligen Extruderdüse 4, 4', 4" befördert wird. Um eine möglichst genaue und präzise Dosierung und Förderung zu erreichen, besitzt der Extruder sowohl eine Vorschub- als auch eine Rückzugsmöglichkeit (nicht dargestellt). Die Dosierung wird durch diese Maßnahme wesentlich vereinfacht.

Denn der erhitzte thermoplastische Kunststoff benötigt eine gewisse Zeit, um aus dem geschmolzenen Zustand abzuhärten. Durch das Zurückziehen wird also ermöglicht, dass auch tatsächlich nur die gewünschte Menge an Kunststoff geschmolzen und freigegeben wird.

Der vorliegende Druckkopf 1 ist für den Mehrfachdruck mit mehreren Extruderdüse 4, 4', 4" ausgebildet. Dies ermöglicht, dass z.B. Druckteile mehrfarbig gestaltet werden können, wobei zu diesem Zweck jede Extruderdüse 4, 4', 4" eine andere Farbe drucken kann. Ebenfalls wird ermöglicht, dass verschiedene thermoplastische Kunststoffe bei der Herstellung eines einzigen Druckteils verwendet werden können, indem jeder Extruderdüse 4, 4', 4" ein anderer Kunststoff zugeordnet wird, was sich bei speziellen Anwendungen als vorteilhaft erweisen kann. Im vorliegenden Fall sind drei Extruderdüsen 4, 4', 4" vorgesehen, die im Kreis angeordnet sind. In Schwerkraftrichtung unterhalb der Extruderdüsen 4, 4', 4" befindet sich die Abdeckungsvorrichtung 5, die im Wesentlichen als flächige Scheibe ausgebildet ist. In der Abdeckungsvorrichtung 5 ist eine Ausnehmung 6 eingearbeitet, durch welche die aktive Extruderdüse, vorliegend die Extruderdüse 4" hindurchtritt.

Im vorliegenden Fall ist die Extruderdüse 4" so weit in Schwerkraftrichtung nach unten verfahren, dass ihre Öffnung durch die Ausnehmung 6 hindurchragt. Es handelt sich bei der Extruderdüse 4" um die aktive Extruderdüse, mit der das Druckteil gerade gedruckt wird, während die anderen Extruderdüsen 4, 4' gerade passiv, also nicht in Betrieb sind. Ist der mit dieser Extruderdüse 4" durchzuführende Druckvorgang abgeschlossen, so wird die Kunststoffzufuhr eingestellt bzw. sogar noch Kunststoff innerhalb des Erwärmungskanals 13, 13', 13" zurückgezogen, damit eine präzise Dosierung erfolgen kann. Anschließend wird die Extruderdüse parallel zur Z-Achse entgegen der Schwerkraftrichtung nach oben verfahren, wobei die Abdeckungsvorrichtung 5 verdreht wird. Die Abdeckvorrichtung 5 ist vorliegend an die Bewegung der jeweiligen Extruderdüse 4, 4', 4" gekoppelt. Die Bewegung wird durch den Antrieb 3 über den Riemen 10 und die Achse 20 angetrieben. Die Ausnehmung 6 kann zusammen mit der Abdeckungsvorrichtung 5 soweit verdreht werden, bis sie an die Stelle gelangt, an der sich die geplante nächste druckende Extruderdüse befindet, sodass diese Extruderdüse. (wie in Figur 1 bei der Düse 4" zu sehen) nach unten verfahren wird und durch die Ausnehmung 6 teilweise hindurchragt. Der Druckkopf 1 kann als Ganzes bewegt werden, um den Druckvorgang auszuführen.

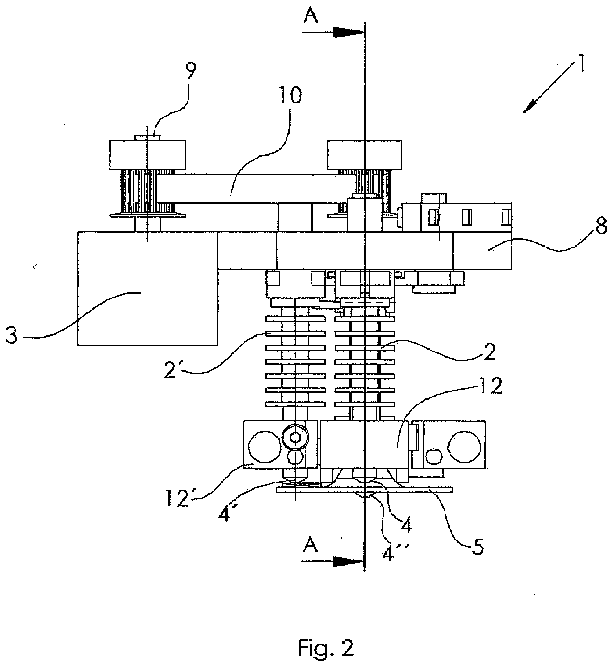

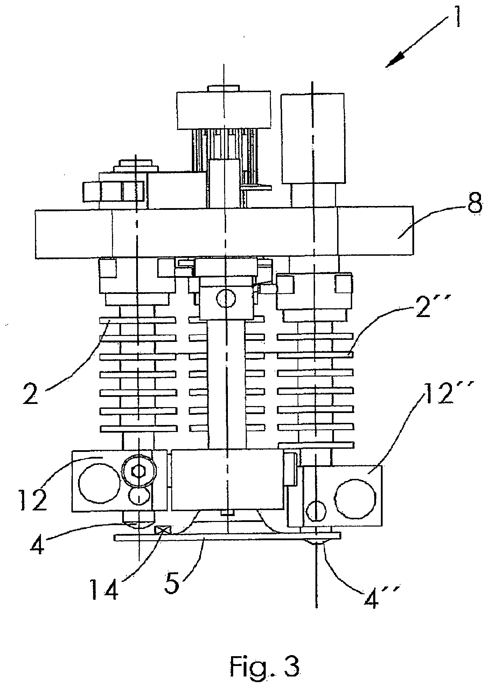

In den Figuren 2 und 3 sind weitere Darstellungen zu sehen, um konstruktive. Details zu verdeutlichen. Die einzelnen Extruderzylinder 2, 2', 2" für die Extruderdüsen 4, 4', 4" werden an einer Halterungsplatte 8 gehaltert. An der Halterungsplatte 8 ist ebenfalls der Antrieb 3 angebracht. Die Welle 9 des Antriebs 3 ragt in Z-Richtung entgegen der Schwerkraftrichtung nach oben hinaus. Über einen Riemen 10 treibt die Welle 9 eine weitere Welle 11 an, die mit der Abdeckungsvorrichtung 5 gekoppelt ist. An den Extruderzylindern 2, 2', 2" unmittelbar vor den Extruderdüsen 4, 4', 4" befinden sich zudem die Heizvorrichtungen 12, 12', 12" zur Bereitstellung der Wärme zur Aufschmelzung des zu verarbeitenden Kunststoffs.

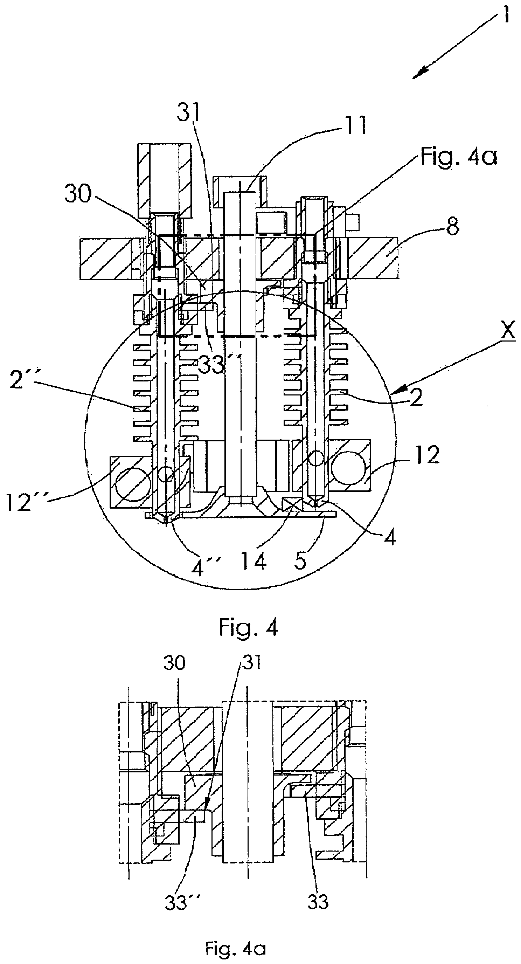

Figur 4 zeigt einen Schnitt entlang der Schnittlinie A-A, wie Sie in Figur 2 angegeben ist. Die Extruderzylinder 2, 2" umfassen je einen Erwärmungskanal 13. 13", durch welchen das zu verarbeitende Material bereitgestellt und über Wärmezufuhr an der Heizvorrichtung 12, 12" aufgeschmolzen wird. Das aufgeschmolzene Material wird durch Vorschub von Material in den Erwärmungskanal 13, 13" durch die vorschubeinrichtung (nicht dargestellt) vorangedrückt, sodass es aus der Extruderdüse 4, 4" austritt. Vorliegend ist die Extruderdüse 4" aktiv geschaltet, so dass sie aus der Ausnehmung 6 in der Abdeckvorrichtung 5 heraustritt.

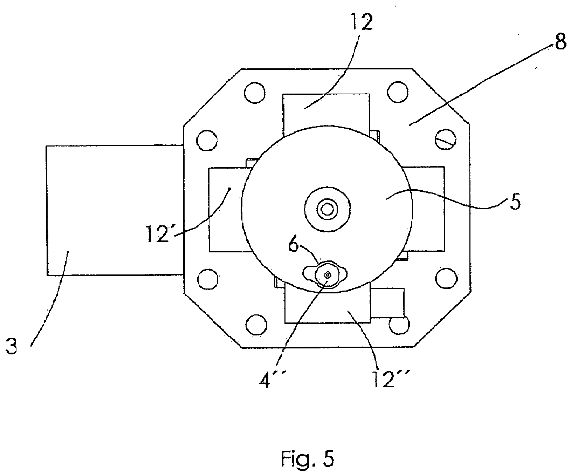

Eine Ansicht von unten der betreffenden Situation ist in Figur 5 dargestellt.

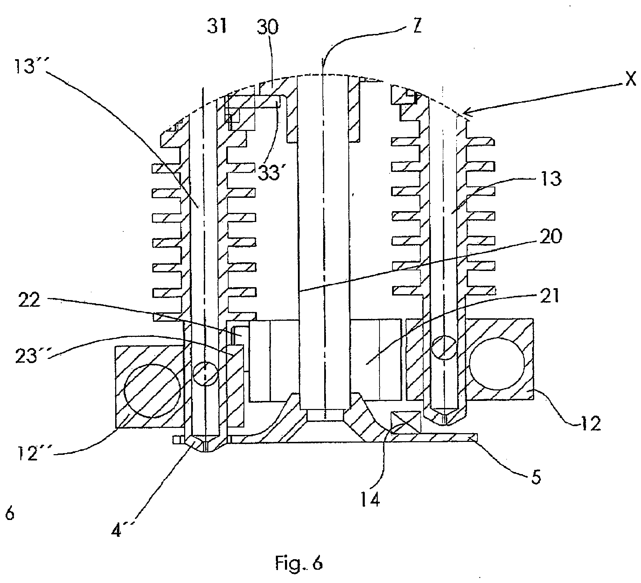

Figur 6 zeigt einen vergrößerten Ausschnitt X aus Figur 4. Zu sehen ist hier insbesondere noch einmal die aktiv arbeitende Extruderdüse 4", welche nach unten durch die Ausnehmung 6 hindurchgefahren ist. In der Extruderdüse 4" befindet sich ein Kanal 13, der nach unten bis zur Öffnung 7 verläuft.

Die beschriebene Kurvensteuerung zur Bewegung der Extruderdüsen ist im vorliegenden Fall so realisiert, dass in die Achse 11 bzw. an einer darauf aufgesetzten Achse 20 eine Kulisse 21 angeordnet ist, welche im Kreissegment übereinstimmend mit der Position der Ausnehmung 6 auf der Abdeckvorrichtung 5 eine Rampe 22 aufweist, die über einen Vorsprung 23" an der Heizvorrichtung 12, 12', 12" die Extruderdüse 4" bzw. den Extruderzylinder 2" nach unten verdrängt. Die Anordnung aus Extruderzylinder und Extruderdüse ist ggf. über einen Federballast (nicht dargestellt) mit einer Rückstellkraft versehen, sodass sie bei weiterem Verdrehen der Abdeckvorrichtung 5 über die Achse 11 bzw. 20 und damit einhergehendem Entfernen der Rampe 22 wieder nach oben zurückfährt.

Alternativ oder ergänzend dargestellt in Figur 4a ist die Möglichkeit, dass in die Achse 11 oder 20 eingearbeitet eine Nut verläuft, oder eine Steuerkulisse 30 oberseitig aufgesetzt ist. Auch diese Steuerkulisse 30 umfasst eine im Winkelsegment der Ausnehmung 6 und der Abdeckvorrichtung 5 angepasste Rampe 31, welche den jeweiligen Extruderzylinder (vorliegend 2") über einen daran angeordneten Anschlag 33" nach unten drückt. Alternativ kann der Anschlag auch in die Konstruktion des Extruderzylinders 2" eingreifen, die sodann mit der Kurvensteuerung und deren Drehbewegung nach unten verdrängt und damit verfahren wird. Die Achse 11 bzw. 20 wiederum ist unmittelbar an die Abdeckungsvorrichtung 5 gekoppelt bzw. fest mit dieser verbunden, sodass eine Drehung der Achse 11 bzw. 20 gleichzeitig eine Drehung der Abdeckungsvorrichtung 5 bedeutet. Der Antrieb kann durch geeignete Positionsanzeiger (Endstopps oder Drehgeber) geregelt werden. Eine Kurvensteuerung kann grundsätzlich für verschiedene Arten von Bewegungen, insbesondere auch für Umwandlung von Drehbewegungen in Linearbewegungen eingesetzt werden.

Weiterhin ist in den Figuren 2 bis 4 und in Figur 6 eine kleine Erhebung 14 auf der Abdeckungsvorrichtung 5 zu sehen. Es handelt sich dabei um eine Reinigungsvorrichtung 14, die als Abstreifer ausgebildet ist und beim Drehen der Abdeckungsvorrichtung 5 an den entsprechenden Extruderdüsen 4, 4', 4" vorbeistreicht und sie von etwaigem, daran verbliebenen Kunststoff reinigt. Es kann sich dabei beispielsweise um ein Messer, eine Klinge, um eine Bürste oder einen flexiblen Abstreifer handeln.

Grundsätzlich befindet sich nur die druckende Extruderdüse 4" in Arbeitsposition direkt über dem Werkstück, während alle anderen Düsen sich in ihrer Ruheposition in Z-Richtung weiter oben befinden. Die Abdeckungsvorrichtung 5 bzw. Abtropfscheibe befindet sich in der Ruheposition der übrigen Extruderdüsen 4, 4' direkt unterhalb von diesen, wobei sich die Ausnehmung 6 unmittelbar unterhalb der Extruderdüse 4" befindet, die nicht verdeckt werden darf, wenn sie gerade aktiv ist.

Grundsätzlich ist die Anzahl der Extruderdüsen nicht beschränkt. Denkbar ist zudem, dass zur weiteren Verringerung der Abtropfgefahr eine zusätzliche Temperatursteuerung für die Heizelemente 12, 12', 12" eingeführt wird, mit der z.B. auch ein Abkühlvorgang ermöglicht wird, sodass etwaiges, noch verbleibendes Kunststoffmaterial schneller erstarren kann.

### Bezugszeichenliste:

- 1: Druckkopf
- 2: Extrüderzylinder
- 3: Antrieb
- 4: Extruderdüsen
- 4': aktive Extruderdüse
- 5: Abdeckungsvorrichtung
- 6: Ausnehmung
- 8: Halterungsplatte
- 9: Welle
- 10: Antriebsriemen
- 11: Welle
- 12: Heizvorrichtung
- 13: Kanal
- 14: Reinigungsvorrichtung
- 20: Achse
- 21: Kulisse
- 22: Rampe
- 23: Vorsprung
- 30: Steuerkulisse
- 31: Rampe
- 33: Anschlag
- X: Ausschnitt
- Z: Achse parallel zur Schwerkraftrichtung

## Patentansprüche

1. Druckkopf (2) zur Verwendung in einem Extruder (1) zur Erstellung dreidimensionaler Werkstücke mit einem 3D-Druck-Verfahren, bei dem das Werkstück durch Auftragen eines Werkstoffs aufgebaut wird, umfassend
- wenigstens eine Extruderdüse (4, 4', 4") zur dosierten Ausgabe des Werkstoffes aus einer formgebenden Öffnung,
- wobei eine Abdeckungsvorrichtung (5) vorhanden ist, um die formgebende Öffnung in Ausgaberichtung (Z) hinter der Extruderdüse (4, 4', 4") abzudecken, sodass aus der Öffnung austretender, insbesondere nachtropfender Werkstoff durch die Abdeckungsvorrichtung (5) auffangbar ist,
- wobei die Abdeckungsvorrichtung (5) und die wenigstens eine Extruderdüse (4, 4', 4") relativ zueinander bewegbar sind, sodass die formgebende Öffnung der wenigstens einen Extruderdüse (4, 4', 4") in deren Ruhezustand von der Abdeckungsvorrichtung (5) in Ausgaberichtung abgedeckt und zum Drucken in Ausgaberichtung wieder freigeben werden kann, wobei
- die wenigstens eine Extruderdüse (4, 4', 4") in Ausgaberichtung (Z) relativ zur Abdeckungsvorrichtung (5) verfahrbar ist, **dadurch gekennzeichnet, dass** eine Kurvensteuerung vorgesehen ist, um eine mechanische Bewegung der wenigstens einen Extruderdüse (4, 4', 4") an eine Bewegung der Abdeckungsvorrichtung (5) zu koppeln und/oder umgekehrt.

2. Druckkopf nach einem der vorgenannten Ansprüche, **dadurch gekennzeichnet, dass** die Abdeckungsvorrichtung (5) im Ruhezustand in Schwerkraftrichtung unter der wenigstens einen Extruderdüse (4, 4', 4") angeordnet ist.

3. Druckkopf nach einem der vorgenannten Ansprüche, **dadurch gekennzeichnet, dass** die Abdeckungsvorrichtung (5), wenn sie die formgebende Öffnung der wenigstens einen Extruderdüse (4, 4', 4") im Ruhezustand in Ausgaberichtung abdeckt, von dieser beabstandet angeordnet ist.

4. Druckkopf nach einem der vorgenannten Ansprüche, **dadurch gekennzeichnet, dass** die Abdeckungsvorrichtung (5) als flächige Scheibe ausgebildet ist.

5. Druckkopf nach einem der vorgenannten Ansprüche, **dadurch gekennzeichnet, dass** die Abdeckungsvorrichtung (5) und die wenigstens eine Extruderdüse (4, 4', 4") relativ so zueinander bewegbar sind, dass die Relativbewegung als Drehbewegung und/oder als Linearbewegung ausgebildet ist.

6. Druckkopf nach einem der vorgenannten Ansprüche, **dadurch gekennzeichnet, dass** in der Abdeckungsvorrichtung (5) eine Aussparung (6) vorgesehen ist und der Druckkopf dazu ausgebildet ist, dass die formgebende Öffnung der wenigstens einen Extruderdüse (4, 4') zum Drucken in Ausgaberichtung (Z) wieder freigeben wird, indem die Aussparung an die entsprechende Stelle in Ausgaberichtung positioniert wird.

7. Druckkopf nach Anspruch 6, **dadurch gekennzeichnet, dass** die wenigstens eine Extruderdüse (4, 4', 4") wenigstens teilweise durch die Aussparung (6) hindurchtretend verfahrbar ist.

8. Druckkopf nach Anspruch 6, **dadurch gekennzeichnet, dass** wenigstens zwei Extruderdüsen (4, 4', 4") vorgesehen sind, die auf einer Kreisbahn, vorzugsweise um eine Symmetrieachse des Druckkopfs, angeordnet sind und die Abdeckungsvorrichtung um eine Achse, die durch den Mittelpunkt der Kreisbahn sowie senkrecht zur Kreisbahnebene verläuft, drehbar ausgebildet ist, wobei insbesondere die Aussparung (6) auf der Projektion der Kreisbahn entlang der Achse auf die Abdeckungsvorrichtung (5) liegt.

9. Druckkopf nach Anspruch 6, **dadurch gekennzeichnet, dass** wenigstens zwei Extruderdüsen (4, 4', 4") vorgesehen sind, die auf einer Linie angeordnet sind und die Abdeckungsvorrichtung auf einer parallel zur Linie ausgerichteten Achse verfahrbar ausgebildet ist, wobei insbesondere die Aussparung auf der Projektion einer der Extruderdüsen (4, 4', 4") im Ruhezustand senkrecht auf die Abdeckungsvorrichtung liegt.

10. Druckkopf nach einem der vorgenannten Ansprüche, **dadurch gekennzeichnet, dass** die Abdeckungsvorrichtung eine Auffangvorrichtung aufweist, um nachtropfenden Werkstoff aus einer nicht druckenden Extruderdüse (4, 4', 4") aufzufangen, wobei die Auffangvorrichtung insbesondere eine Rinne zum Auffangen aufweist und/oder insbesondere aus der Abdeckungsvorrichtung entnehmbar ist.

11. Druckkopf nach einem der vorgenannten Ansprüche, **dadurch gekennzeichnet, dass** eine Reinigungsvorrichtung (14) vorgesehen ist, um eine der wenigstens einen Extruderdüse (4, 4', 4") und/oder deren formgebende Öffnung (7) nach und/oder vor dem Drucken von dem Werkstoff zu reinigen.

12. Druckkopf nach einem der vorgenannten Ansprüche, **dadurch gekennzeichnet, dass** die Reinigungsvorrichtung (14) eine Bürste und/oder ein Messer bzw. eine Klinge und/oder einen flexiblen Abstreifer umfasst.

13. Druckkopf nach einem der vorgenannten Ansprüche, **dadurch gekennzeichnet, dass** die Reinigungsvorrichtung (14) mit der Abdeckungsvorrichtung (5) und/oder wenigstens einer der wenigstens einen Extruderdüse (4, 4', 4") mechanisch gekoppelt ist, insbesondere fest verbunden ist, sodass die Reinigungsvorrichtung den Reinigungsvorgang bei der Relativbewegung zwischen Abdeckungsvorrichtung und der wenigstens einen Extruderdüse (4, 4', 4") und/oder beim Verfahren der entsprechenden Extruderdüse (4, 4', 4") in Ausgaberichtung durchführt.

## Claims

1. A print head **(2)** for use in an extruder **(1)** for producing three-dimensional workpieces by a 3D-printing process in which the workpiece is constructed by applying a material, comprising at least one extruder nozzle **(4, 4', 4")** for metered dispensing of the material from a shaping opening, wherein a covering device **(5)** is provided to cover the shaping opening in the output direction **(Z)** behind the extruder nozzles **(4, 4', 4"),** so that material leaking from the opening, in particular dripping material, can be collected through the covering device **(5)**,
the covering device **(5)** and at least one extruder nozzle **(4, 4', 4")** are movable relative to each other, so that the shaping opening of the at least one extruder nozzle **(4, 4', 4")** in the idle state of the covering device **(5)** can be covered in the output direction and released again for printing in the output direction,
whereby the at least one extruder nozzle **(4, 4', 4")** can be moved in the output direction **(Z)** relative to the covering device **(5)**, **characterized in that** a cam control is provided for coupling a mechanical movement of the at least one extruder nozzle **(4, 4', 4")** to a movement of the covering device **(5)** and/or vice versa.

2. Print head according to one of the aforementioned claims, **characterized in that** the covering device **(5)** is arranged in the idle state in the direction of gravity underneath the at least one extruder nozzle **(4, 4', 4").**

3. Print head according to one of the aforementioned claims, **characterized in that** the covering device **(5)**, when it covers the shaping opening of the at least one extruder nozzle **(4, 4', 4")** in the idle state in the output direction, is arranged at a distance therefrom.

4. Print head according to one of the aforementioned claims, **characterized in that** the covering device **(5)** is designed as a flat disc.

5. Print head according to one of the aforementioned claims, **characterized in that** the covering device **(5)** and the at least one extruder nozzle **(4, 4', 4")** are movable relative to each other in such a way that the relative movement is realized as rotary movement and/or linear movement.

6. Print head according to one of the aforementioned claims, **characterized in that** a recess **(6)** is provided in the covering device **(5)** and the print head is adapted to release the shaping opening of the at least one extruder nozzle **(4, 4')** for printing in the output direction (z) by positioning the recess at the corresponding position in the output direction.

7. Print head according to Claim 6, **characterized in that** the at least one extruder nozzle **(4, 4', 4")** can be moved at least partially through the recess **(5)**.

8. Print head according to Claim 6, **characterized in that** at least two extruder nozzles **(4, 4', 4")** are provided, which are arranged on a circular path, preferably around a symmetrical axis of the print head, and the covering device **(5)** is designed to be rotatable about an axis passing through the centre of the circular path and perpendicular to the circular path plane, in particular the recess **(6)** on the projection of the circular path along the axis lying on the covering device **(5)**.

9. Printing head according to claim 6, **characterized in that** at least two extruder nozzles **(4, 4', 4")** are provided, which are arranged on a line and the covering device **(5)** is designed such that it can be moved on an axis which is aligned parallel to the line, whereby in particular the recess on the projection of one of the extruder nozzles **(4, 4', 4")** in the idle state is perpendicular to the covering device.

10. Print head according to one of the aforementioned claims, **characterized in that** the covering device **(5)** comprises means for collecting dripping material from a non-printing extruder nozzle **(4, 4', 4")**, the collecting device in particular comprises a gutter for collecting and/or, in particular, being removable from the covering device.

11. Print head according to one of the aforementioned claims, **characterized in that** a cleaning device **(14)** is provided for cleaning one of the at least one extruder nozzle **(4, 4', 4")** and/or its shaping opening (7) after and/or before printing of the material.

12. Print head according to one of the aforementioned claims, **characterized in that** the cleaning device **(14)** comprises a brush and/or a knife or rather blade and/or a flexible scraper.

13. Print head according to one of the aforementioned claims, **characterized in that** the cleaning device **(14)** is mechanically coupled to the covering device **(5)** and/or at least one of the at least one extruder nozzles **(4, 4', 4")**, in particular is firmly connected, so that the cleaning device carries out the cleaning process during the relative movement between the covering device and the at least one extruder nozzle **(4, 4', 4")** and/or during the movement of the corresponding extruder nozzle **(4, 4', 4")** in the output direction.

## Revendications

1. Tête d'impression (2) destinée à être utilisée dans une extrudeuse (1) pour la fabrication de pièces tridimensionnelles avec un procédé d'impression 3D, dans lequel la pièce est fabriquée par application d'un matériau, comprenant
- au moins une buse d'extrudeuse (4, 4', 4") pour distribuer de manière dosée le matériau à partir d'une ouverture lui donnant sa forme,
- un dispositif de recouvrement (5) étant prévu pour recouvrir l'ouverture donnant la forme dans la direction de distribution (Z) derrière la buse d'extrudeuse (4, 4', 4"), de telle sorte que le matériau sortant de l'ouverture, en particulier gouttant hors de celle-ci, puisse être recueilli par le dispositif de recouvrement (5),
- le dispositif de recouvrement (5) et l'au moins une buse d'extrudeuse (4, 4', 4") pouvant être déplacés l'un par rapport à l'autre de telle sorte que l'ouverture donnant la forme de l'au moins une buse d'extrudeuse (4, 4', 4"), dans son état de repos, soit recouverte par le dispositif de recouvrement (5) dans la direction de distribution et puisse à nouveau être libérée en vue de l'impression dans la direction de distribution,
- l'au moins une buse d'extrudeuse (4, 4', 4") pouvant être déplacée dans la direction de distribution (Z) par rapport au dispositif de recouvrement (5),
**caractérisée en ce**
**qu'**une commande par came est prévue pour accoupler un déplacement mécanique de l'au moins une buse d'extrudeuse (4, 4', 4") à un déplacement du dispositif de recouvrement (5) et/ou inversement.

2. Tête d'impression selon l'une quelconque des revendications précédentes, **caractérisée en ce que** le dispositif de recouvrement (5) est disposé à l'état de repos dans la direction de la force de pesanteur en dessous de l'au moins une buse d'extrudeuse (4, 4', 4").

3. Tête d'impression selon l'une quelconque des revendications précédentes, **caractérisée en ce que** le dispositif de recouvrement (5), lorsqu'il recouvre l'ouverture donnant la forme de l'au moins une buse d'extrudeuse (4, 4', 4") à l'état de repos dans la direction de distribution, est disposé à distance de celle-ci.

4. Tête d'impression selon l'une quelconque des revendications précédentes, **caractérisée en ce que** le dispositif de recouvrement (5) est réalisé sous forme de disque plat.

5. Tête d'impression selon l'une quelconque des revendications précédentes, **caractérisée en ce que** le dispositif de recouvrement (5) et l'au moins une buse d'extrudeuse (4, 4', 4") peuvent être déplacés l'un par rapport à l'autre de telle sorte que le déplacement relatif soit réalisé sous forme de mouvement de rotation et/ou sous forme de mouvement linéaire.

6. Tête d'impression selon l'une quelconque des revendications précédentes, **caractérisée en ce qu'**un évidement (6) est prévu dans le dispositif de recouvrement (5) et la tête d'impression est réalisée de telle sorte que l'ouverture donnant la forme de l'au moins une buse d'extrudeuse (4, 4') soit à nouveau libérée pour produire une impression dans la direction de distribution (Z) en positionnant l'évidement au niveau de l'emplacement correspondant dans la direction de distribution.

7. Tête d'impression selon la revendication 6, **caractérisée en ce que** l'au moins une buse d'extrudeuse (4, 4', 4") peut être déplacée en traversant au moins en partie l'évidement (6).

8. Tête d'impression selon la revendication 6, **caractérisée en ce qu'**au moins deux buses d'extrudeuse (4, 4', 4") sont prévues, lesquelles sont disposées sur une trajectoire circulaire, de préférence autour d'un axe de symétrie de la tête d'impression et le dispositif de recouvrement est réalisé de manière à pouvoir tourner autour d'un axe qui s'étend à travers le centre de la trajectoire circulaire et perpendiculairement au plan de la trajectoire circulaire, l'évidement (6) se trouvant notamment sur la projection de la trajectoire circulaire le long de l'axe sur le dispositif de recouvrement (5).

9. Tête d'impression selon la revendication 6, **caractérisée en ce qu'**au moins deux buses d'extrudeuse (4, 4', 4") sont prévues, lesquelles sont disposées sur une ligne et le dispositif de recouvrement est réalisé de manière déplaçable sur un axe orienté parallèlement à la ligne, l'évidement se trouvant notamment sur la projection de l'une des buses d'extrudeuse (4, 4', 4") dans l'état de repos perpendiculairement au dispositif de recouvrement.

10. Tête d'impression selon l'une quelconque des revendications précédentes, **caractérisée en ce que** le dispositif de recouvrement présente un dispositif de collecte afin de recueillir le matériau gouttant depuis une buse d'extrudeuse n'imprimant pas (4, 4', 4"), le dispositif de collecte présentant notamment une rigole de collecte et/ou pouvant notamment être enlevé du dispositif de recouvrement.

11. Tête d'impression selon l'une quelconque des revendications précédentes, **caractérisée en ce qu'**un dispositif de nettoyage (14) est prévu afin de nettoyer l'au moins une buse d'extrudeuse (4, 4', 4") et/ou son ouverture donnant la forme (7) après et/ou avant l'impression du matériau.

12. Tête d'impression selon l'une quelconque des revendications précédentes, **caractérisée en ce que** le dispositif de nettoyage (14) comprend une brosse et/ou un couteau ou une lame et/ou un dispositif de raclage flexible.

13. Tête d'impression selon l'une quelconque des revendications précédentes, **caractérisée en ce que** le dispositif de nettoyage (14) est accouplé mécaniquement au dispositif de recouvrement (5) et/ou à au moins l'une de l'au moins une tête d'extrudeuse (4, 4', 4"), en particulier est connecté fixement à celle-ci, de telle sorte que le dispositif de nettoyage effectue l'opération de nettoyage lors du déplacement relatif entre le dispositif de recouvrement et l'au moins une buse d'extrudeuse (4, 4', 4") et/ou lors du déplacement de la buse d'extrudeuse correspondante (4, 4', 4") dans la direction de distribution.
